# EUROPEAN PATENT APPLICATION

(11) **EP 2 381 631 A1**
(43) Date of publication of application: **26.10.2011**
(21) Application number: 09834041.7
(22) Date of filing: 16.09.2009
(51) Int. Cl.: H04L 12/66

(54) **MULTIMEDIA MESSAGE GATEWAY AND METHOD FOR CONTROLLING ITS FLOW**

(30) Priority: 23.12.2008 CN 200810241498
(71) Applicant: ZTE Corporation, Shenzhen, Guangdong 518057 (CN)
(72) Inventor: ZHANG, Hengsheng, Shenzhen Guangdong 518057 (CN)
(74) Representative: Manitz, Finsterwald & Partner GbR
(86) International application number: PCT/CN2009/073968
(87) International publication number: WO 2010/072088

(57) **Abstract**

The present invention relates to a multimedia message gateway and a method of the gateway for realizing flow control, wherein the multimedia message gateway comprises a gateway configuration station and service processor(s); the gateway configuration station configures rated flow threshold(s) to each multimedia message center, and synchronizes the rated flow threshold(s) to each of the service processors as an initial flow quota of each of the service processors; each of the service processors dispatches service in a period according to the flow quota; each of the service processors broadcasts, after the period ends, traffic dispatched by itself in the present period to the other service processor(s), counts the traffic dispatched by the other service processor(s) in the present period broadcasted by the other service processor(s) at the same time, calculates total traffic dispatched by a cluster system in the present period, and determines a flow quota of a next period for each of the service processors according to the total traffic. The present invention can ensure the stable operations of the service system.

## Description

### Field of the Invention

The present invention relates to communication filed, and in particular to a multimedia message gateway and a method for realizing the gateway flow control.

### Background of the Invention

In a value-added service system of the communication field, the increasing traffic imposes a higher requirement on the processing performance of the value-added service system. In a current mainstream service processing system, the requirement of service processing is generally satisfied by a plurality of service processors (or servers) forming a cluster system.

Due to the difference of the service processing performance among the systems, a flow limitation is applied to the service initiator so as to realize the purpose that the stable operation of the system of the service receiver is ensured. For the service receiver, the overload of the service may result in the crash of the system. Therefore, in order to ensure that the whole system operates stably, the flow limitation imposed among each of the sub-systems, which is also referred to as overload protection control, is very important.

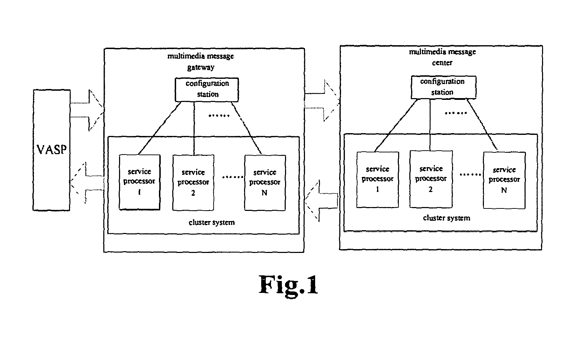

In a multimedia message system, there is such a service model: a value-added service platform (VASP) ==>> a multimedia message gateway ==>> a multimedia message center; the topology figure among the VASP, the multimedia message gateway, and the multimedia message center is shown in Fig.1; both the multimedia message gateway and the multimedia message center comprise a configuration station and service processor(s), wherein the service processors form a cluster system.

### Summary of the Invention

The problem to be solved by the present invention is to provide a multimedia message gateway and a method for realizing the gateway flow control; the present invention has a substantial practicability and can ensure a stable operation of a system.

A multimedia message gateway comprises a gateway configuration station and at least two service processors, wherein the at least two service processors form a cluster system, wherein
the gateway configuration station is adapted to configure rated flow threshold(s) to each multimedia message center, and to synchronize the rated flow threshold(s) to each of the at least two service processors; and
the service processors are adapted to dispatch service in a period according to a flow quota, periodically broadcast traffic dispatched in the present period by itself to the other service processor(s), count traffic dispatched by the other service processor(s) in the present period broadcasted by the other service processor(s), calculate total traffic dispatched by the cluster system in the present period, and determine a flow quota of a next period for itself according to the total traffic and the flow quota of the present period for itself.

Each of the service processors further comprises a counter and a timer; wherein the counter is adapted to count traffic dispatched by the processer(s) in each period; and the timer is adapted to set the period.

A method for realizing a multimedia gateway flow control comprises:
step 1, a gateway configuration station configuring rated flow threshold(s) to each multimedia message center, and synchronizing the rated flow threshold(s) to each of the service processors as an initial flow quota of each of the service processors;
step 2, each of the service processors dispatching service according to the rated quota in a period; and
step 3, each of the service processors broadcasting, after the period ends, traffic dispatched by itself in the present period to the other service processor(s), counting the traffic dispatched by the other service processor(s) in the present period broadcasted by the other service processor(s) at the same time, calculating total traffic dispatched by a cluster system in the present period, and determining a flow quota of a next period for each of the service processors according to the total traffic.

The step 2 specifically comprises the following steps:
step 2a, each of the service processors accumulating traffic to be dispatched by itself in the present period, comparing the traffic with the flow quota of itself in the present period, wherein if the traffic to be dispatched by itself in the present period is greater than or equal to the flow quota of itself in the present period, step 2b will be executed; otherwise, step 2c will be executed;
step 2b, buffering the service to be dispatched by itself in the present period, and waiting to process the service in the next period; and
step 2c, dispatching service according to the flow quota of itself in the present period; and counting traffic to be dispatched by using a counter.

In the step 3, each of the service processors determines a flow quota of the next period of itself by the following mode:
each of the service processors comparing the total traffic with the flow quota of each of the service processors in the present period, wherein if the total traffic is greater than the flow quota of each of the service processors in the present period, the flow quota of each of the service processors in the present period minus the total traffic, then plus the rated flow threshold, and the result is taken as the flow quota of each of the service processors for the next period; if the total traffic is less than or equal to the flow quota of each of the service processors in the present period, the flow quota of each of the service processors for the next period is the rated flow threshold.

In the step 3, each of the service processors clears the counter of itself after broadcasting the traffic dispatched by itself in the previous period to the other service processor(s).

The present invention is applicable to the flow control among cluster systems, especially among the systems of mobile value-added service such as the stream media service, the multimedia message systems, and the short message systems. The present invention solves the problem of the inconvenience in flow control among the cluster systems resulted from too many processors. The present invention can remarkably improve the effects of the flow control and ensure a stable operation of the service system.

### Brief Description of the Drawings

Fig.1 is the topology figure among a VASP, a multimedia message gateway, and a multimedia message center;
Fig.2 is the flow figure of the method of the present invention;
Fig.3 is the flow figure of the flow control processed by a single service processor.

### Detailed Description of the Embodiments

The present invention will be described in detail in combining drawings and preferred embodiments.

The principle block figure of a multimedia message gateway according to the present invention is shown in Fig.1. The multimedia message gateway comprises a gateway configuration platform and service processors 1-N; the service processors constitute a cluster system, and the gateway configuration platform is adapted to configure rated flow threshold(s) to each multimedia message center and synchronize the rated flow threshold(s) to each of the service processors.

The service processors are adapted to dispatch service in a period according to a flow quota, periodically broadcast traffic dispatched in the present period by itself to the other service processor(s), count traffic dispatched by the other service processor(s) in the present period broadcasted by the other service processor(s), calculate total traffic dispatched by the cluster system in the present period, and determine a flow quota of a next period for itself according to the total traffic and the flow quota of the present period for itself.

Each of the service processor also comprises a counter and a timer, wherein the counter is adapted to perform a statistic operation on traffic dispatched in each period; and the timer is adapted to set the period.

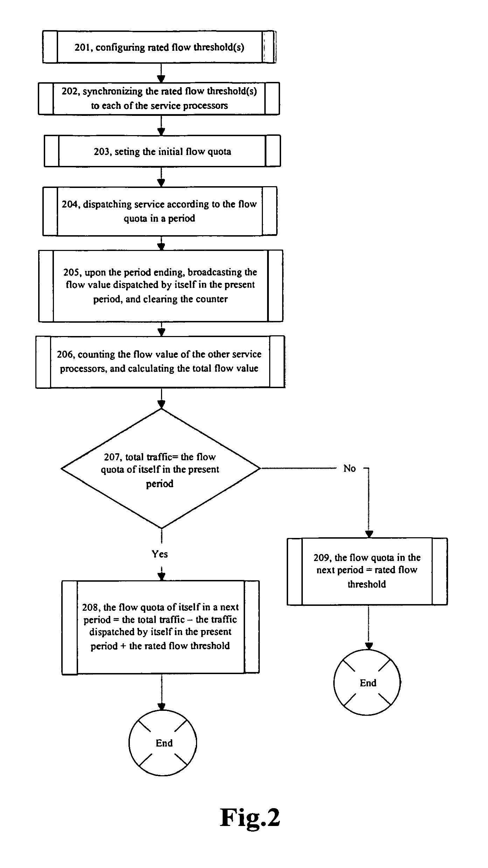

Fig.2 shows a flow figure of the method of the present invention, the method specifically comprises the following Step 201- Step 209.

Step 201, a gateway configuration station configures rated flow threshold(s) to each multimedia message center.

Step 202, the rated flow threshold(s) is/are synchronized to each of the service processors.

Step 203, each of the service processors sets the rated flow threshold synchronized to itself as the initial flow quota of itself.

Step 204, each of the service processors dispatches service according to the flow quota in a period.

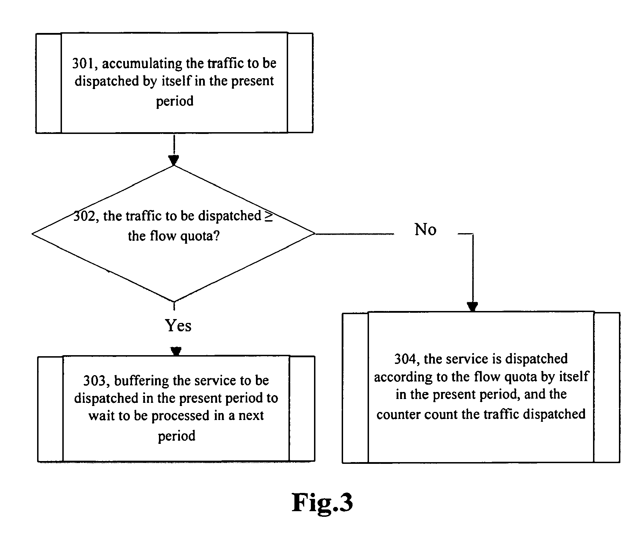

As shown in Fig.3, the present step comprises the following Step 301- Step 304:
Step 301, each of the service processors accumulates the traffic to be dispatched by itself in the present period.
Step 302, each of the service processors compares the traffic to be dispatched by itself in the present period obtained by the accumulation with the flow quota of itself in the period, wherein if the traffic to be dispatched is greater than or equal to the flow quota of itself in the period, Step 303 will be executed; otherwise, Step 304 will be performed.
Step 303, the service to be dispatched in the present period is buffered, and waits to be processed in a next period.
Step 304, the service is dispatched according to the flow quota in the present period, and the counter counts the traffic dispatched.
Step 205, each of the service processors broadcasts, after the period ends (i.e., the timer expires), the traffic dispatched by itself in the present period to the other service processor(s), and clears the counter of itself.
Step 206, each of the service processors does statistics on the traffic dispatched by the other service processor(s) after the period ends in the present period broadcasted by the other service processor(s), and calculates the total traffic dispatched by the cluster system in the present period.
, Step 207, each of the service processors compares the total traffic with the flow quota of itself in the present period, wherein if the total traffic is greater than the flow quota of itself, Step 208 will be executed, otherwise, Step 209 will be executed.
Step 208, each of the service processors makes the flow quota of itself in the present period minus the total traffic, then plus the rated flow threshold, the result is made as the flow quota of itself for a next period.
Step 209, each of the service processors sets the rated flow threshold as the flow quota of itself for the next period.

### Industrial Practicability

The present invention is applicable to the flow control among cluster systems, especially among the systems of mobile value-added service such as the stream media service, the multimedia message systems, and the short message systems. The present invention solves the problem of the inconvenience in flow control among the cluster systems resulted from too many processors, and can remarkably improve the effects of the flow control and ensure the stable operations of the service system.

## Claims

1. A multimedia message gateway, which comprises a gateway configuration station and at least two service processors, wherein the at least two service processors form a cluster system, wherein
the gateway configuration station is adapted to configure rated flow threshold(s) to each multimedia message center, and synchronize the rated flow threshold(s) to each of the at least two service processors; and
each of the at least two service processors is adapted to dispatch service in a period according to a flow quota, periodically broadcast traffic dispatched in the present period by itself to the other service processor(s) of the at least two service processors, count traffic dispatched by the other service processor(s) in the present period broadcasted by the other service processor(s), calculate total traffic dispatched by the cluster system in the present period, and determine a flow quota of a next period for itself according to the total traffic and the flow quota of the present period for itself.

2. The multimedia message gateway according to Claim 1, wherein each of the at least two service processors further comprises a counter and a timer; the counter is adapted to count traffic dispatched by the processer(s) in each period; the timer is adapted to set the period.

3. A method for realizing a multimedia gateway flow control, comprising:
step 1, a gateway configuration station configuring rated flow threshold(s) to each of the multimedia message centers, and synchronizing the rated flow threshold(s) to each of the service processors as an initial flow quota of each of the service processors;
step 2, each of the service processors dispatching service according to the rated quota in a period; and
step 3, each of the service processors broadcasting, after the period ends, traffic dispatched by itself in the present period to the other service processor(s), counting the traffic dispatched by the other service processor(s) in the present period broadcasted by the other service processor(s) at the same time, calculating total traffic dispatched by a cluster system in the present period, and determining a flow quota of a next period for each of the service processors according to the total traffic;
wherein the cluster system comprises each of the service processors; and the total traffic dispatched by the cluster system in the present period is the sum of the traffic dispatched by each of the service processors in the present period.

4. The method according to Claim 3, wherein the step 2 comprises the following steps:
step 2a, each of the service processors accumulating traffic to be dispatched by itself in the present period, and comparing the traffic with the flow quota of itself in the present period, wherein if the traffic to be dispatched by itself in the present period is greater than or equal to the flow quota of itself in the present period, step 2b will be executed; otherwise, step 2c will be executed;
step 2b, buffering the service to be dispatched by itself in the present period, and waiting to process the service in the next period; and
step 2c, dispatching service according to the flow quota of itself in the present period; and counting traffic to be dispatched by using a counter.

5. The method according to Claim 3, wherein in the step 3, the step of determining a flow quota of a next period for each of the service processors is realized by the following mode:
each of the service processors comparing the total traffic with the flow quota of each of the service processors in the present period, wherein if the total traffic is greater than the flow quota of each of the service processors in the present period, the flow quota of each of the service processors in the present period minus the total traffic, then plus the rated flow threshold, and the result is taken as the flow quota of each of the service processors for the next period; if the total traffic is less than or equal to the flow quota of each of the service processors in the present period, the flow quota of each of the service processors for the next period is the rated flow threshold.

6. The method according to Claim 4, wherein in the step 3, each of the service processors clears the counter of itself after the step that each of the service processors broadcasts the traffic dispatched by itself in the previous period to the other service processor(s).
